# EUROPÄISCHE PATENTSCHRIFT

(11) **EP 2 287 693 B1**
(45) Veröffentlichungstag und Bekanntmachung des Hinweises auf die Patenterteilung: **15.05.2013**
(21) Anmeldenummer: 10171800.5
(22) Anmeldetag: 03.08.2010
(51) Int. Cl.: G05B 23/02, G05B 19/042, H04L 12/00

(54) **Verfahren zum synchronen Erfassen und Aufzeichnen von Prozess- und/oder Zustandsdaten sowie Automatisierungssystem**
Method for synchronous acquiring and recording of process and/or status data and automation system
Procédé d'acquisition et d'enregistrement synchrones de données de processus et/ou d'état et système d'automatisation

(30) Priorität: 04.08.2009 DE 102009037156
(43) Veröffentlichungstag der Anmeldung: 23.02.2011
(73) Patentinhaber: Lenze Automation GmbH, 31855 Aerzen (DE)
(72) Erfinder: Ehlich, Martin, 32689 Kalletal (DE); Götz, Tino, 30449 Hannover (DE); Tinebor, Manfred, 32683 Barntrup (DE)
(74) Vertreter: Patentanwälte Ruff, Wilhelm, Beier, Dauster & Partner

(56) Entgegenhaltungen:
- DE-A1- 10 207 222
- DE-A1- 10 321 679

## Beschreibung

Die Erfindung betrifft ein Verfahren zum synchronen Erfassen und Aufzeichnen von Prozess- und/oder Zustandsdaten.

Automatisierungssysteme können unterschiedliche Automatisierungskomponenten umfassen, die über einen Datenübertragungsbus miteinander gekoppelt sind. Die jeweiligen Automatisierungskomponenten implementieren hierbei üblicherweise spezifische Automatisierungsfunktionen, wobei eine Synchronisation zwischen den Automatisierungskomponenten über den Datenübertragungsbus erfolgen kann.

Ein derartiges Automatisierungssystem ist beispielsweise in der DE 101 20 558 A1 gezeigt, wobei die dort gezeigten Automatisierungskomponenten mittels eines Synchronisationssignals synchronisiert werden.

Zur Inbetriebnahme, Diagnose und Optimierung des Automatisierungssystems ist es häufig wünschenswert, Prozess- und/oder Zustandsdaten in den jeweiligen Automatisierungskomponenten mit hoher zeitlicher Auflösung zu erfassen und aufzuzeichnen, d.h. eine so genannte Datenlogger-Funktionalität zu implementieren. Da es zur Diagnose üblicherweise notwendig ist, die aufgezeichneten Daten der unterschiedlichen Automatisierungskomponenten zeitlich aneinander auszurichten, d.h. übereinander zu legen, sind Maßnahmen zu treffen, die dies ermöglichen.

Eine bekannte Maßnahme ist, die Messwerte mit einem Zeitstempel zu versehen, wobei hierzu in einer jeweiligen Automatisierungskomponente eine Echtzeituhr zur Erzeugung der Zeitstempel benötigt wird, wodurch sich die Bauteilekosten erhöhen. Bei dem in der DE 101 20 558 A1 offenbarten Verfahren erfolgt dies, indem die Messwerterfassung in einem durch das Synchronisationssignal vorgegebenen Äquidistanzraster synchron durchgeführt wird. Eine zeitliche Auflösung der synchron erfassten Messwerte wird daher durch einen zeitlichen Abstand von aufeinander folgenden Synchronisationssignalen begrenzt.

Die DE 102 07 222 A1 zeigt ein Verfahren und eine Vorrichtung zum Erfassen eines aus Teildatensätzen mehrerer Steuergeräte zusammengesetzen, zeitpunktbezogenen Datensatzes, bei dem ein verteiltes Erfassen mittels einer CAN-Nachricht ausgelöst werden kann.

Die DE 103 21 679 A1 zeigt ein Verfahren, bei dem eine Aufnahme von Sensormesswerten dadurch erreicht werden kann, dass in entsprechenden Sensoren ein Synchronisationspuls erkannt wird.

Der Erfindung liegt die Aufgabe zugrunde, ein Verfahren zum synchronen Erfassen und Aufzeichnen von Prozess- und/oder Zustandsdaten zur Verfügung zu stellen, das ein kostengünstiges, synchrones Erfassen und Aufzeichnen von Prozess- und/oder Zustandsdaten mit hoher zeitlicher Auflösung ermöglicht.

Die Erfindung löst diese Aufgabe durch ein Verfahren mit den Merkmalen des Anspruchs 1.

Bevorzugte Ausführungsformen sind Gegenstand der Unteransprüche, deren Wortlaut hiermit durch Bezugnahme zum Inhalt der Beschreibung gemacht wird, um unnötige Wiederholungen zu vermeiden.

Das erfindungsgemäße Verfahren dient zum synchronen Erfassen und Aufzeichnen bzw. Speichern von Prozess- und/oder Zustanddaten in mindestens zwei verschiedenen Automatisierungskomponenten. Die Automatisierungskomponenten als Teile eines Automatisierungssystems realisieren jeweils spezifische Teilaufgaben des Automatisierungssystems. Die Automatisierungskomponenten sind über einen Datenübertragungsbus, beispielsweise einen Feldbus wie PROFIBUS, miteinander gekoppelt, wobei über den Datenübertragungsbus Signale bzw. Daten übertragbar sind, die von den Automatisierungskomponenten gleichzeitig empfangen werden können. Zum Starten der Prozessdatenerfassung in einer jeweiligen Automatisierungskomponente wird zunächst ein Triggersignal gesendet, das durch eine spezifische der mindestens zwei Automatisierungskomponenten, beispielsweise einen Datenübertragungsbus-Master eines Master-Slave-Bussystems, erzeugt werden kann. Sobald das Triggersignal durch die jeweiligen Automatisierungskomponenten empfangen wird, dies geschieht im Wesentlichen gleichzeitig, beginnt eine jeweilige Automatisierungskomponente mit dem Erfassen und Aufzeichnen ihrer Prozess- und/oder Zustandsdaten. Da das Triggersignal durch die Automatisierungskomponenten gleichzeitig bzw. synchron empfangen wird, beginnen die Automatisierungskomponenten gleichzeitig bzw. synchron mit dem Erfassen und Aufzeichnen. Die Prozess- und/oder Zustandsdaten in einer jeweiligen Automatisierungskomponente werden nach dem Starten des Erfassens fortlaufend mit einer zeitlichen Auflösung erfasst und aufgezeichnet, die ausschließlich von einer internen Aufzeichnungszykluszeit der jeweiligen Automatisierungskomponente abhängt, d.h. insbesondere nicht von Signalen auf dem Datenübertragungsbus bestimmt ist. Da die Aufzeichnungszykluszeit aufgrund der üblicherweise hohen Rechenleistung der Automatisierungskomponenten im Vergleich zu einer synchronen Übertragung der jeweiligen Messdaten über den Datenübertragungsbus klein ist, ermöglicht die Erfindung eine synchrone Aufzeichnung der jeweiligen Prozess- und/oder Zustandsdaten in den jeweiligen Automatisierungskomponenten mit hoher zeitlicher Auflösung. Bei Bedarf können die in den jeweiligen Automatisierungskomponenten aufgezeichneten Daten über den Datenübertragungsbus ausgelesen und zur Auswertung zeitlich ausgerichtet werden.

Das Triggersignal wird aus einem Synchronisationssignal des Datenübertragungsbusses abgeleitet, das periodisch mit einer Synchronisationssignalzykluszeit, beispielsweise 0,5ms bis 10ms, über den Datenübertragungsbus übertragen wird.

Es wird ein Triggersignal-Freigabezählersignal umfassend einen Freigabezählerwert gesendet, wobei in einer jeweiligen Automatisierungskomponente der Freigabezählerwert gespeichert und bei jedem auf das Triggersignal-Freigabezählersignal folgenden Synchronisationssignal der Freigabezählerwert dekrementiert bzw. um 1 erniedrigt wird, bis der Freigabezählerwert null ist, wobei dasjenige Synchronisationssignal, das einem Freigabezählerwert von Null entspricht, das Triggersignal bildet. Das Triggersignal-Freigabesignal bzw. das Triggersignal-Freigabezählersignal kann hierbei von einer beliebigen Automatisierungskomponente des Automatisierungssystems gesendet werden, wobei das Triggersignal, das Triggersignal-Freigabesignal, das Triggersignal-Freigabezählersignal bzw. das Synchronisationssignal bevorzugt von einem sogenannten Bus-Master, d.h. von einem Master in einem Master-Slave-Bussystem, gesendet wird.

In einer Weiterbildung werden pro Zeiteinheit mehr Prozess- und/oder Zustandsdaten in einer jeweiligen Automatisierungskomponente erfasst und aufgezeichnet, als pro Zeiteinheit Daten über den Datenübertragungsbus übertragbar sind. Dies ermöglicht eine lokale und synchrone Erfassung und Aufzeichnung der in den jeweiligen Automatisierungskomponenten anfallenden Daten mit hoher zeitlicher Auflösung, wobei im Anschluss an eine automatisierüngskomponentenlokale Aufzeichnung die derart aufgezeichneten Daten über den Datenübertragungsbus vergleichsweise langsam zur Auswertung zu einer Auswertekomponente übertragen werden können.

In einer Weiterbildung werden die in einer jeweiligen Automatisierungskomponente aufgezeichneten Prozess- und/oder Zustandsdaten ausgelesen, beispielsweise durch einen PC, der mit dem Datenübertragungsbus verbunden ist und der ein entsprechendes Auswerteprogramm aufweist, wobei die ausgelesenen Daten unter Berücksichtigung der jeweiligen internen Aufzeichnungszykluszeiten der Automatisierungskomponenten bezüglich einer einheitlichen Zeitbasis ausgerichtet überlagert dargestellt werden. Dies ermöglicht eine zeitliche Ausrichtung der Daten der jeweiligen Automatisierungskomponenten, beispielsweise zur Optimierung und/oder Fehlersuche.

In einer Weiterbildung ist die Synchronisationssignalzykluszeit größer als die Aufzeichnungszykluszeit zumindest einer oder aller Automatisierungskomponenten, d.h. die Daten werden mit höherer zeitlicher Auflösung in den Automatisierungskomponenten aufgezeichnet, als dies mittels des Synchronisationssignals möglich wäre.

In einer Weiterbildung ist eine Aufzeichnungszykluszeit einer jeweiligen Automatisierungskomponente identisch mit deren Regelungszykluszeit, die beispielsweise in einen Bereich von 10µs bis 500µs liegen kann.

Bevorzugte Ausführungsformen der Erfindung werden nachfolgend unter Bezugnahme auf die Zeichnungen beschrieben. Hierbei zeigt schematisch:
- Fig. 1: ein Automatisierungssystem mit verschiedenen Automatisierungskomponenten, die über einen Datenübertragungsbus miteinander gekoppelt sind, und
- Fig. 2: einen zeitlichen Ablauf von Signalen und Prozessen des in Fig. 1 gezeigten Automatisierungssystems.

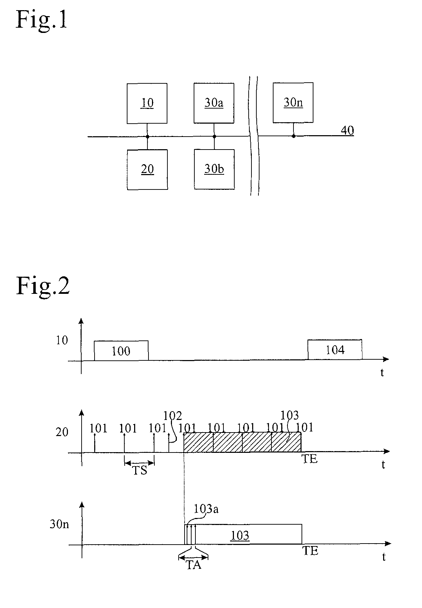

Fig. 1 zeigt ein Automatisierungssystem mit einem Leitrechner 10 und verschiedenen Automatisierungskomponenten 20 und 30a bis 30n, die über einen Datenübertragungsbus in Form eines herkömmlichen Feldbusses 40 miteinander gekoppelt sind. Über den Feldbus 40 sind Signale übertragbar, die von den Automatisierungskomponenten 20 und 30a bis 30n gleichzeitig empfangen werden. Der Feldbus kann beispielsweise ein PROFIBUS sein.

Der Leitrechner 10 kann durch einen herkömmlichen Personalcomputer (PC) gebildet sein, der über einen Feldbusanschluss verfügt und auf dem eine Diagnosesoftware abläuft (Diagnose-Master für den Feldbus 40). Der Leitrechner 10 kann über weitere, nicht dargestellte Netzwerkschnittstellen verfügen und darüber beispielsweise an ein übergeordnetes System angeschlossen sein.

Die Automatisierungskomponente 20 bildet einen sogenannten Bus-Master, wohingegen die Automatisierungskomponenten 30a bis 30n sogenannte Bus-Slaves bilden. Der Bus-Master 20 steuert in herkömmlicher Weise die Datenübertragung über den Datenübertragungsbus 40. Hinsichtlich weiterer Details sei auf die einschlägige Literatur zu Master-Slave-Bussystemen verwiesen.

Das Verfahren zum synchronen Erfassen und Aufzeichnen von Prozess- und Zustandsdaten der jeweiligen Automatisierungskomponenten 20 und 30a bis 30n wird nachfolgend unter Bezugnahme auf Fig. 2 beschrieben. Exemplarisch für die Automatisierungskomponenten 30a bis 30n ist lediglich die Automatisierungskomponente 30n gezeigt.

Zur Vorbereitung der Datenerfassung und Datenaufzeichnung wird zunächst im Leitrechner 10 mittels der Diagnosesoftware in einem Schritt 100 eine Triggerbedingung definiert. Die Triggerbedingung kann beispielsweise vom Zustand bestimmter Eingangssignale und/oder vom Eintreten gewisser Ereignisse in einer oder mehreren Automatisierungskomponenten abhängig gemacht werden. Vorliegend ist die triggerbedingungsrelevante Automatisierungskomponente der Bus-Master 20.

Nach der Definition der Triggerbedingung im Schritt 100 wird die Triggerbedingung an den Bus-Master 20 übertragen, der diese abspeichert und im Folgenden in Abhängigkeit von seinen Eingangssignalen und Zustandsdaten überwacht, ob die Triggerbedingung eintritt.

Der Bus-Master 20 überträgt periodisch mit einer Synchronisationssignalzykluszeit TS ein Synchronisationssignal 101, das beispielsweise zur Synchronisation von Prozessen in den jeweiligen Automatisierungskomponenten dienen kann. Wenn nun der Bus-Master 20 bestimmt, dass die Triggerbedingung eingetreten ist, sendet er ein Triggersignal-Freigabesignal 102 über den Datenübertragungsbus 40 an die verbleibenden Automatisierungskomponenten 30a bis 30n. Das Triggersignal-Freigabesignal 102 zeigt an, dass das auf das Triggersignal-Freigabesignal 102 folgende Synchronisationssignal 101 das Triggersignal bildet.

Wenn das entsprechenden Synchronisationssignal 101 als Triggersignal über den Datenübertragungsbus 40 übertragen wird, beginnen die Automatisierungskomponenten 20 und 30a bis 30n in einem jeweiligen Prozess 103 mit der Erfassung und dem Aufzeichnen ihrer internen bzw. lokalen Prozess- und Zustandsdaten. Die Prozess- und Zustandsdaten werden jeweils mit einer zeitlichen Auflösung bzw. einer internen Aufzeichnungszykluszeit TA erfasst und aufgezeichnet. Vorliegend sei angenommen, dass sämtliche Automatisierungskomponenten 20 und 30a bis 30n eine identische Aufzeichnungszykluszeit TA aufweisen, die identisch mit einer Regelungszykluszeit der Automatisierungskomponenten ist und in einen Bereich von 10µs bis 500µs liegen kann. Es versteht sich, dass das Erfassen und Aufzeichnen der Daten auch mit unterschiedlichen Aufzeichnungszykluszeiten erfolgen kann, d.h. dass beispielsweise die Automatisierungskomponenten 20, 30a und 30b unterschiedliche Aufzeichnungszykluszeiten aufweisen können.

Das Erfassen und Aufzeichnen der Prozess- und Zustandsdaten kann für eine vorgegebene Zeitdauer erfolgen, beispielsweise 10s, die für alle Automatisierungskomponenten gleich ist. Die vorgegebene Zeitdauer kann jedoch auch unterschiedlich sein, also individuell in jeder Automatisierungskomponente eingestellt sein/werden. Alternativ kann das Erfassen und Aufzeichnen der Prozess- und Zustandsdaten auch mittels eines Befehls, der beispielsweise vom Bus-Master 20 gesendet wird, beendet werden. Vorliegend sei angenommen, dass zu einem Zeitpunkt TE die Automatisierungskomponenten 20 und 30a bis 30n den Aufzeichnungs- und Erfassungsprozess 103 beenden.

Zur Diagnose der in der jeweiligen Automatisierungskomponente lokal aufgezeichneten Daten liest der Leitrechner 10 in einem Prozessschritt 104 sämtliche in den Automatisierungskomponenten 20 und 30a bis 30n aufgezeichneten Prozess- und Zustandsdaten aus. Da die Aufzeichnungszykluszeit der jeweiligen Automatisierungskomponenten bekannt ist und die Datenerfassung und Aufzeichnung synchron gestartet worden ist, kann der Leitrechner 10 bzw. dessen Diagnosesoftware die aufgezeichneten Daten zeitlich miteinander ausrichten und dadurch ein zeitlich exaktes Abbild der Prozess- und Zustandsdatenhistorie erstellen. Dies ermöglicht eine exakte Analyse des gesamten Automatisierungssystems in Abhängigkeit von einer frei definierbaren Triggerbedingung, womit beispielsweise eine Fehlerdiagnose erheblich vereinfacht wird.

Die exakte zeitliche Ausrichtung der lokal in den Automatisierungskomponenten erfassten Prozess- und Zustandsdaten erfolgt durch getriggertes, d.h. synchronisiertes Starten der Aufzeichnung in den jeweiligen Automatisierungskomponenten, wodurch es nicht notwendig ist, eine Echtzeituhr in den jeweiligen Automatisierungskomponenten vorzusehen, um die Prozess- und Zustandsdaten jeweils mit einem exakten Zeitstempel zu versehen. Zusätzlich erfolgt das Erfassen und Aufzeichnen der Prozess- und Zustandsdaten automatisierungskomponentenlokal mit hoher zeitlicher Auflösung, die bei einer synchronisierten Aufzeichnung wie beispielsweise in der DE 101 20 558 A1 aufgrund der begrenzten Bandbreite des Datenübertragungsbusses nicht erreicht werden kann.

Welche Prozess- und Zustandsdaten in den jeweiligen Automatisierungskomponenten erfasst und aufgezeichnet werden, ist grundsätzlich frei definierbar. So kann es möglich sein, dass sämtliche Automatisierungskomponenten jeweils einen identischen Satz von Prozess- und Zustandsdaten erfassen und aufzeichnen. Alternativ kann auch dynamisch, beispielsweise mittels eines entsprechenden Befehls, festgelegt werden, welche Prozess- und Zustandsdaten aus einer vorgegebenen Menge von Prozess- und Zustandsdaten in einer jeweiligen Automatisierungskomponente lokal erfasst und gespeichert werden.

Die im Prozessschritt 100 definierte Triggerbedingung kann beispielsweise zeitabhängig, weg-/winkel-abhängig und/oder ereignisgesteuert sein.

Bei dem Automatisierungssystem kann es sich um ein Antriebssystem mit mehreren, miteinander verkoppelten Achsen handeln.

Die gezeigten Ausführungsformen ermöglichen ein kostengünstiges, synchrones Erfassen und Aufzeichnen von Prozess- und/oder Zustandsdaten mit hoher zeitlicher Auflösung.

## Patentansprüche

1. Verfahren zum synchronen Erfassen und Aufzeichnen von Prozess- und/oder Zustandsdaten in mindestens zwei verschiedenen Automatisierungskomponenten (20, 30a~30n), wobei die Automatisierungskomponenten über einen Datenübertragungsbus (40) miteinander gekoppelt sind, über den Signale (101, 102) übertragbar sind, die von den Automatisierungskomponenten gleichzeitig empfangen werden
mit den Schritten:
- Senden eines Triggersignals (101, 102), insbesondere durch eine der mindestens zwei Automatisierungskomponenten, und
- Starten des Erfassens und des Aufzeichnens der Prozess- und/oder Zustandsdaten einer jeweiligen Automatisierungskomponente in der jeweiligen Automatisierungskomponente, sobald das Triggersignal durch die jeweilige Automatisierungskomponente empfangen wird, wobei die Prozess- und/oder Zustandsdaten in einer jeweiligen Automatisierungskomponente nach dem Starten fortlaufend mit einer zeitlichen Auflösung erfasst und aufgezeichnet werden, die ausschließlich von einer internen Aufzeichnungszykluszeit (TA) der jeweiligen Automatisierungskomponente abhängt, **dadurch gekennzeichnet, dass** das Triggersignal aus einem Synchronisationssignal (101) des Datenübertragungsbusses abgeleitet wird, das periodisch mit einer Synchronisationssignalzykluszeit (TS) über den Datenübertragungsbus übertragen wird, und dass
von einem Bus-Master ein Triggersignal-Freigabezählersignal umfassend einen Freigabezählerwert gesendet wird, wobei bei jedem auf das Triggersignal-Freigabezählersignal folgenden Synchronisationssignal der Freigabezählerwert dekrementiert wird, bis der Freigabezählerwert Null ist, wobei dasjenige Synchronisationssignal, das einem Freigabezählerwert von Null entspricht, das Triggersignal bildet.

2. Verfahren nach Anspruch 1, **dadurch gekennzeichnet, dass** pro Zeiteinheit mehr Prozess- und/oder Zustandsdaten in einer jeweiligen Automatisierungskomponente erfasst und aufgezeichnet werden, als pro Zeiteinheit Daten über den Datenübertragungsbus übertragbar sind.

3. Verfahren nach Anspruch 1 oder 2, **dadurch gekennzeichnet, dass** die in einer jeweiligen Automatisierungskomponente aufgezeichneten Prozess- und/oder Zustandsdaten ausgelesen werden und unter Berücksichtigung einer internen Aufzeichnungszykluszeit der jeweiligen Automatisierungskomponente überlagert dargestellt werden.

4. Verfahren nach einem der Ansprüche 1 bis 3, **dadurch gekennzeichnet, dass** die Synchronisationssignalzykluszeit größer ist als die Aufzeichnungszykluszeiten der jeweiligen Automatisierungskomponenten.

5. Verfahren nach einem der Ansprüche 1 bis 4, **dadurch gekennzeichnet, dass** die Aufzeichnungszykluszeit gleich einer Regelungszykluszeit einer jeweiligen Automatisierungskomponente ist.

## Claims

1. A method for synchronous acquiring and recording of process and/or status data in at least two different automation components (20, 30a-30n), wherein the automation components are coupled to each other via a data transfer bus (40), and via said bus signals (101, 102) are transmittable which are received by the automation components simultaneously,
comprising the steps:
- sending a trigger signal (101, 102), in particular by one of the at least two automation components, and
- starting of acquisition and recording of the process and/or status data of a respective automation component in the respective automation component, upon receiving the trigger signal by the respective automation component, wherein after starting the process and/or status data in a respective automation component are continuously acquired and recorded in a time resolution exclusively depending on an internal recording cycle time (TA) of the respective automation component, **characterized in that**
the trigger signal is derived from a synchronization signal (101) of the data transfer bus, periodically transmitted via the data transfer bus with a synchronization cycle time (TS), and **in that** by a bus master a trigger signal enabling count signal comprising an enable count number is sent, wherein with each synchronization signal succeeding the trigger signal enable count signal the enable count number is decremented until the enable count number is zero, wherein the synchronization signal corresponding to an enable count number of zero is the trigger signal.

2. The method according to claim 1, **characterized in that** per time unit more process and/or status data of a respective automation component are acquired and recorded than data are transmittable via the data transfer bus per time unit.

3. The method according to claim 1 or 2, **characterized in that** the process and/or status data recorded in a respective automation component are read and output in a superimposed manner considering an internal recording cycle time of the respective automation component.

4. The method according to any of the claims 1 to 3, **characterized in that** the synchronization cycle time is greater than the recording cycle times of the respective automation components.

5. The method according to any of the claims 1 to 4, **characterized in that** the recording cycle time is equal to a regulation cycle time of a respective automation component.

## Revendications

1. Procédé pour détecter et enregistrer de manière synchrone des données de processus et/ou d'état dans au moins deux composants d'automatisation différents (20, 30a-30n), dans lequel les composants d'automatisation sont couplés entre eux par l'intermédiaire d'un bus de transmission de données (40) par l'intermédiaire duquel des signaux (101, 102), qui sont reçus simultanément par les composants d'automatisation, peuvent être transmis,
comprenant les étapes consistant à :
- émettre un signal de déclenchement (101, 102), notamment par l'intermédiaire de l'un des au moins deux composants d'automatisation, et
- démarrer la détection et l'enregistrement des données de processus et/ou d'état d'un composant d'automatisation respectif dans le composant d'automatisation respectif dès que le signal de déclenchement a été reçu par l'intermédiaire du composant d'automatisation respectif, dans lequel les données de processus et/ou d'état sont détectées et enregistrées en continu dans un composant d'automatisation respectif après le démarrage avec une résolution temporelle qui dépend uniquement d'un temps de cycle d'enregistrement interne (TA) du composant d'automatisation respectif,
**caractérisé en ce que**
le signal de déclenchement est dérivé d'un signal de synchronisation (101) du bus de transmission de données qui est transmis périodiquement avec un temps de cycle de signal de synchronisation (TS) par l'intermédiaire du bus de transmission de données, et
**en ce qu'**un signal de compteur de validation de signal de déclenchement comprenant une valeur de compteur de validation est émis par un maître de bus, la valeur du compteur de validation étant décrémentée lors de chaque signal de synchronisation faisant suite au signal de compteur de validation de signal de déclenchement jusqu'à ce que la valeur du compteur de validation devienne nulle, le signal de synchronisation qui correspond à une valeur de compteur de validation nulle constituant le signal de déclenchement.

2. Procédé selon la revendication 1, **caractérisé en ce qu'**un plus grand nombre de données de processus et/ou d'état sont détectées et enregistrées dans un composant d'automatisation respectif par unité de temps que de données pouvant être transmises par unité de temps par l'intermédiaire du bus de transmission de données.

3. Procédé selon la revendication 1 ou 2, **caractérisé en ce que** les données de processus et/ou d'état enregistrées dans un composant d'automatisation respectif sont lues et sont représentées de manière superposée en tenant compte d'un temps de cycle d'enregistrement interne du composant d'automatisation respectif.

4. Procédé selon l'une quelconque des revendications 1 à 3, **caractérisé en ce que** le temps de cycle du signal de synchronisation est supérieur aux temps de cycle d'enregistrement des composants d'automatisation respectifs.

5. Procédé selon l'une quelconque des revendications 1 à 4, **caractérisé en ce que** le temps de cycle d'enregistrement est égal à un temps de cycle de commande d'un composant d'automatisation respectif.
